# EUROPÄISCHE PATENTANMELDUNG

(11) **EP 4 552 937 A1**
(43) Veröffentlichungstag der Anmeldung: **14.05.2025**
(21) Anmeldenummer: 24210779.5
(22) Anmeldetag: 05.11.2024
(51) Int. Cl.: B60W 10/02, B60W 10/11, B60W 50/029, B60W 50/14, B60W 50/02, F16H 61/12

(54) **VERFAHREN ZUM BETRIEB EINES NUTZFAHRZEUGS**

(30) Priorität: 08.11.2023 DE 102023130918
(71) Anmelder: Daimler Truck AG, 70771 Leinfelden-Echterdingen (DE)
(72) Erfinder: Chater, Nadia, Stuttgart (DE); Paxion, Sebastien, Heidelberg (DE); Zehler, Jan, Stuttgart (DE); Zell, Christopher, Stuttgart (DE)

(57) **Zusammenfassung**

Die Erfindung betrifft ein Verfahren zum Betrieb eines Nutzfahrzeugs, umfassend ein Lenksystem mit einer durch eine Lenkhilfepumpe (5) versorgten hydraulischen Lenkhilfe (1) und einer durch ein Fahrzeugbordnetz (7) versorgten elektrischen Lenkhilfe (2), sowie eine Steuerung (8) eines Antriebsstrangs mit einer Kupplung (10) und einem Getriebe (14), wobei bei Erkennung eines imminentem Ausfalls des Fahrzeugbordnetzes (7) die Öffnung des Antriebsstrangs, einschließlich das Öffnen der Kupplung (10) und/oder das Auslegen eines Ganges, verhindert wird. Die Erfindung betrifft ferner ein zur Durchführung des Verfahrens konfiguriertes elektronisches Steuergerät (13) und ein Nutzfahrzeug mit einem solchen Steuergerät (13).

## Beschreibung

Die Erfindung betrifft ein Verfahren zum Betrieb eines Nutzfahrzeugs gemäß dem Oberbegriff des Anspruchs 1, ein elektronisches Steuergerät gemäß Anspruch 8 und ein Nutzfahrzeug gemäß dem Oberbegriff des Anspruchs 9.

In schweren Lastkraftwagen, die rein mechanisch die Anforderungen der ECE-R79 nicht erfüllen, wird ein hoher Verfügbarkeitsanspruch an die Lenkhilfe gestellt. Die Lenkhilfe darf im Fehlerfall nicht ausfallen, ohne dass der Fahrer mit ausreichendem Vorlauf über den potentiellen Ausfall gewarnt und aufgefordert wird, das Fahrzeug schnellstmöglich in einen sicheren Zustand zu überführen. Dies bedingt eine gewisse Redundanz im Design des Lenksystems in Bezug auf die Aktuatorik und die Energiequelle.

In bisherigen Seriensystemen umfasst die Aktuatorik einerseits ein durch eine Lenkhilfepumpe versorgtes, hydraulisches Lenkgetriebe, wobei die Lenkhilfepumpe durch den Antriebsmotor des Fahrzeugs angetrieben wird, und anderseits einen durch das Fahrzeugbordnetz versorgten Elektromotor, der zusätzlich zum Fahrer-Lenkmoment ein Überlagerungsmoment einbringt. Bei Ausfall der Hydraulik verstärkt der Elektromotor das Lenkmoment vom Fahrer, sodass das Fahrzeug ausreichend lenkbar bleibt.

Im Falle eines Ausfalls des Fahrzeugbordnetzes fällt neben dem elektrischen Lenkungsaktuator auch die Ansteuerung des Antriebsstrangs aus. Falls der Antriebsstrang zum Zeitpunkt des Bordnetzausfalles geschlossen war (Zugbetrieb), dann bleibt er geschlossen und der Verbrennungsmotor bleibt mit der Antriebsachse kraftschlüssig verbunden. Über den geschlossenen Antriebsstrang treiben die Achsen die Lenkhilfepumpe weiterhin an, auch wenn die Antriebsstrangsteuerung komplett ausfällt.

Ein Restrisiko besteht allerdings in Situationen, in denen der Antriebsstrang offen ist: beispielsweise im Rollbetrieb mit offener Kupplung oder in Getriebeneutralstellung oder kurzzeitig während eines Gangwechsels. In diesen Situationen kann bei einem Ausfall des Fahrzeugbordnetzes der Antriebsstrang nicht immer wieder geschlossen werden, sodass die Lenkhilfe gesamtumfänglich ausfällt.

Es ist möglich, eine zum Fahrzeugbordnetz redundante Energiequelle für den Elektromotor vorzusehen, bestehend aus einer so genannten Backup-Batterie und einem elektronischen Steuergerät, welches den Ladezustand der Backup-Batterie überwacht und bei Ausfall des Fahrzeugbordnetzes die Spannungsversorgung des Elektromotors auf die Backup-Batterie umschaltet.

EP 0 314 409 B1 beschreibt ein Fahrzeugfahrsteuersystem, umfassend eine Motorverbrennungssteuervorrichtung, einen Fehlfunktionsdetektor zum Erkennen einer Fehlfunktion der Motorverbrennungssteuervorrichtung und eine Motorverbrennungsstoppeinheit, die als Reaktion auf eine Fehlfunktion wirksam ist. Ein Signal vom Störungsdetektor wird erkannt, um die Verbrennung im Motor zu stoppen. Eine Kupplungssteuervorrichtung verfügt über eine Kupplungsschalteinheit, die auf das Fehlfunktionserkennungssignal reagiert, um ein Steuersignal zum Stellen einer Kupplung in ihre eingerückte Position an einen Aktor auszugeben. Eine Getriebesteuervorrichtung verfügt über eine Einheit zum Schalten einer Gangposition, die auf das Fehlfunktionserkennungssignal reagiert, um ein Steuersignal an einen Aktuator auszugeben, um die Gangposition in eine andere Position als "neutral" zu bringen.

Der Erfindung liegt die Aufgabe zu Grunde, ein neuartiges Verfahren zum Betrieb eines Nutzfahrzeugs, ein neuartiges elektronisches Steuergerät und ein neuartiges Nutzfahrzeug anzugeben.

Die Aufgabe wird erfindungsgemäß gelöst durch ein Verfahren zum Betrieb eines Nutzfahrzeugs mit den Merkmalen des Anspruchs 1, durch ein elektronisches Steuergerät mit den Merkmalen des Anspruchs 8 und durch ein Nutzfahrzeug mit den Merkmalen des Anspruchs 9.

Vorteilhafte Ausgestaltungen der Erfindung sind Gegenstand der Unteransprüche.

Es wird ein Verfahren zum Betrieb eines Nutzfahrzeugs vorgeschlagen, umfassend ein Lenksystem mit einer durch eine Lenkhilfepumpe versorgten hydraulischen Lenkhilfe und einer durch ein Fahrzeugbordnetz versorgten elektrischen Lenkhilfe, sowie eine Steuerung eines Antriebsstrangs mit einer Kupplung und einem Getriebe. Erfindungsgemäß wird bei Erkennung eines imminenten Ausfalls des Fahrzeugbordnetzes die Öffnung des Antriebsstrangs, einschließlich das Öffnen der Kupplung und/oder das Auslegen eines Ganges, verhindert.

In einer Ausführungsform wird der imminente Ausfall des Fahrzeugbordnetzes durch Überwachung einer Spannung des Fahrzeugbordnetzes und Erkennung einer Unterschreitung einer Spannungsschwelle erkannt, die insbesondere niedriger als eine Normalspannung und höher als eine minimale Spannung ist, die zum Betrieb der Steuerung des Antriebsstrangs erforderlich ist.

In einer Ausführungsform erfolgt die Überwachung der Spannung bei der Steuerung des Antriebsstrangs oder bei einem Lenkungssteuergerät.

In einer Ausführungsform wird die Öffnung des Antriebsstrangs im Schubbetrieb und/oder bei Erkennung eines Ausfalls eines Vortriebs des Fahrzeugs verhindert, insbesondere bei einem erkannten Fehler der Ansteuerung eines Verbrennungsmotors oder bei erkanntem Treibstoffmangel.

In einer Ausführungsform unterbleibt die Verhinderung des Öffnens des Antriebsstrangs unterhalb einer bestimmten Fahrgeschwindigkeit, insbesondere unterhalb von 10 km/h bis 15 km/h.

In einer Ausführungsform wird bei Verhinderung des Öffnens des Antriebsstrangs und/oder bei Fahren in einer Neutralstellung des Getriebes über eine Schnittstelle eine Warnung ausgegeben.

In einer Ausführungsform werden Informationen über die Ursache der Verhinderung des Öffnens des Antriebsstrangs abgespeichert.

Gemäß einem Aspekt der vorliegenden Erfindung wird ein elektronisches Steuergerät, das zur Durchführung des oben beschriebenen Verfahrens konfiguriert ist, vorgeschlagen.

Gemäß einem Aspekt der vorliegenden Erfindung wird ein Nutzfahrzeug vorgeschlagen, umfassend ein Lenksystem mit einer durch eine Lenkhilfepumpe versorgten hydraulischen Lenkhilfe und einer durch ein Fahrzeugbordnetz versorgten elektrischen Lenkhilfe, eine Steuerung eines Antriebsstrangs mit einer Kupplung und einem Getriebe, sowie dem oben beschriebenen elektronischen Steuergerät.

In einer Ausführungsform ist die Lenkhilfepumpe durch einen Antriebsmotor des Nutzfahrzeugs angetrieben.

Durch die Gangwechselunterdrückung bei imminentem Ausfall der Bordnetzspannung kann das Risiko eines Ausfalls der Lenkhilfe auf einen vertretbaren Bereich wesentlich reduziert werden, so dass das Fahrzeug mit der hydraulischen Lenkhilfe lenkbar bleibt.

Das redundante Bordnetz wird durch ein Eingreifen in die Antriebsstrangschaltstrategie überflüssig gemacht.

Durch den Entfall des redundanten Bordnetzes können Kostensenkungen, geringere Wartungskosten (kein Tausch der Back-up Batterie), Gewicht und Bauraum gespart werden. Zudem ergeben sich durch die Erfindung eine höhere Verfügbarkeit der Lenkung und ein geringeres Risiko für das Fahrzeug, liegenzubleiben.

Ausführungsbeispiele der Erfindung werden im Folgenden anhand von Zeichnungen näher erläutert.

Dabei zeigen:
- Fig. 1: eine schematische Ansicht eines Lenksystems und eines Antriebsstrangs eines Fahrzeugs gemäß dem Stand der Technik,
- Fig. 2: eine schematische Ansicht eines Lenksystems und eines Antriebsstrangs eines Fahrzeugs gemäß einem Aspekt der vorliegenden Erfindung,
- Fig. 3: ein schematisches Diagramm eines typischen Abfalls einer Spannung bei Ausfall eines Fahrzeugbordnetzes,
- Fig. 4: ein schematisches Diagramm einer Verteilungsdichte der Dauer des Abfalls der Spannung.

Einander entsprechende Teile sind in allen Figuren mit den gleichen Bezugszeichen versehen.

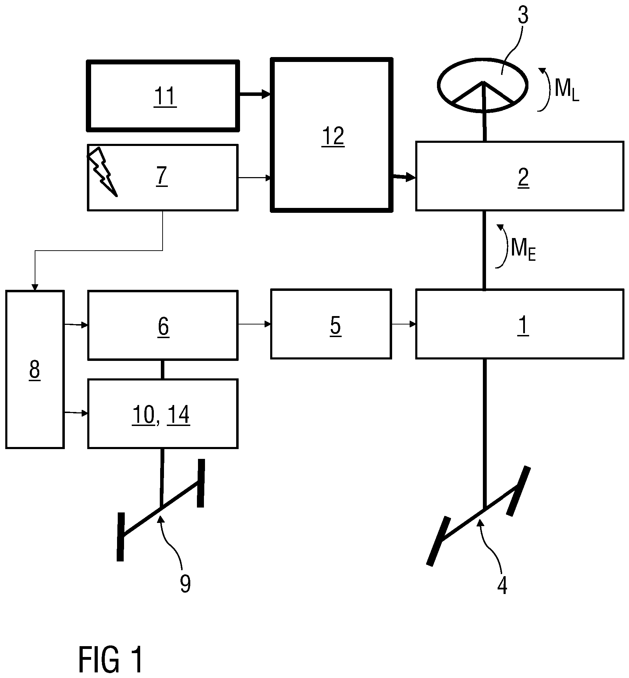

Figur 1 ist eine schematische Ansicht eines Lenksystems und eines Antriebsstrangs eines Fahrzeugs, insbesondere eines Nutzfahrzeugs, beispielsweise eines schweren Lastkraftwagens, gemäß dem Stand der Technik.

Das Nutzfahrzeug weist ein Lenksystem mit einer Aktuatorik, umfassend mindestens eine Lenkhilfe 1, 2, beispielsweise eine hydraulische Lenkhilfe 1 und eine elektrische Lenkhilfe 2, zur Unterstützung eines von einem Fahrer an einem Lenkrad 3 eingebrachten Lenkmoments M_{L} zum Lenken einer Lenkachse 4 auf. In einem Nutzfahrzeug wird ein hoher Verfügbarkeitsanspruch an die Lenkhilfe 1, 2 gestellt. Die Lenkhilfe 1, 2 darf im Fehlerfall nicht ausfallen, ohne dass der Fahrer mit ausreichendem Vorlauf über den potentiellen Ausfall gewarnt und aufgefordert wird, das Fahrzeug schnellstmöglich in einen sicheren Zustand zu überführen. Dies bedingt eine gewisse Redundanz im Design des Lenksystems in Bezug auf eine Aktuatorik und eine Energiequelle.

In bisherigen Seriensystemen umfasst die Aktuatorik einerseits die durch eine Lenkhilfepumpe 5 versorgte, hydraulische Lenkhilfe 1 (auch als hydraulisches Lenkgetriebe bezeichnet), wobei die Lenkhilfepumpe 5 durch einen Antriebsmotor 6, beispielsweise einen Verbrennungsmotor, des Fahrzeugs angetrieben wird. Anderseits ist die durch ein Fahrzeugbordnetz 7 versorgte elektrische Lenkhilfe 2 (z.B. ein Elektromotor) vorgesehen, die zusätzlich zum Lenkmoment M_{L} ein elektrisches Überlagerungsmoment M_{E} einbringt. Bei Ausfall der hydraulischen Lenkhilfe 1 verstärkt die elektrische Lenkhilfe 2 das Lenkmoment M_{L} vom Fahrer, sodass das Fahrzeug ausreichend lenkbar bleibt.

Im Falle eines Ausfalls des Fahrzeugbordnetzes 7 fällt neben der elektrischen Lenkhilfe 2 auch eine Steuerung 8 eines Antriebsstrangs für mindestens eine Antriebsachse 9 aus, der den Antriebsmotor 6, eine Kupplung 10 und ein Getriebe 14 umfasst. Falls der Antriebsstrang zum Zeitpunkt des Ausfalls des Fahrzeugbordnetzes 7 geschlossen war (Zugbetrieb), dann bleibt er geschlossen und der Antriebsmotor 6 bleibt mit der Antriebsachse 9 kraftschlüssig verbunden. Über den geschlossenen Antriebsstrang treibt die Antriebsachse 9 die Lenkhilfepumpe 5 weiterhin an, auch wenn die Steuerung 8 des Antriebsstrangs komplett ausfällt.

Ein Restrisiko besteht allerdings in Situationen, in denen der Antriebsstrang offen ist: beispielsweise im Rollbetrieb mit offener Kupplung 10 oder in Getriebeneutralstellung oder kurzzeitig während eines Gangwechsels. In diesen Situationen kann bei einem Ausfall des Fahrzeugbordnetzes 7 der Antriebsstrang nicht immer wieder geschlossen werden, sodass die Lenkhilfe 1, 2 gesamtumfänglich ausfällt.

Im Stand der Technik ist es bekannt, eine zum Fahrzeugbordnetz 7 redundante Energiequelle für die elektrische Lenkhilfe 2 vorzusehen, umfassend eine so genannte Backup-Batterie 11 und ein elektronisches Steuergerät 12 zum redundanten Bordnetzmanagement, welches den Ladezustand der Backup-Batterie 11 überwacht und bei Ausfall des Fahrzeugbordnetzes 7 die Spannungsversorgung der elektrischen Lenkhilfe 2 vom Fahrzeugbordnetz 7 auf die Backup-Batterie 11 umschaltet.

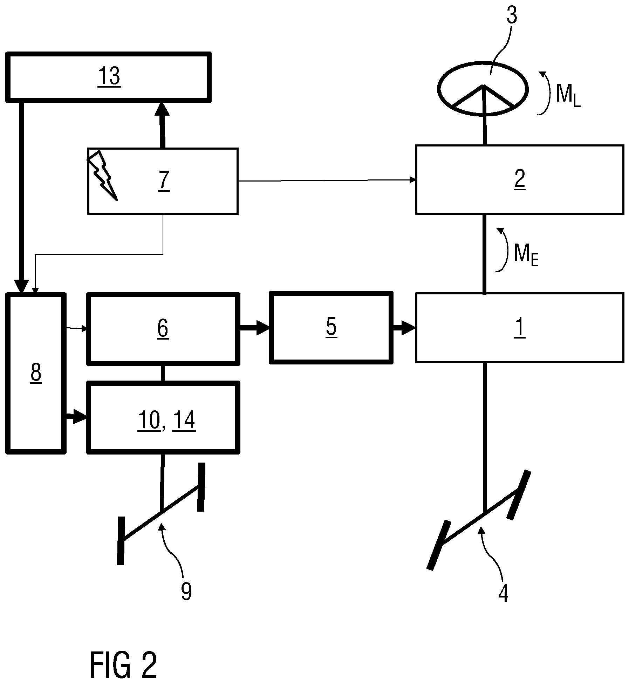

Figur 2 ist eine schematische Ansicht eines Lenksystems und eines Antriebsstrangs eines Fahrzeugs gemäß einem Aspekt der vorliegenden Erfindung. Die Anordnung stimmt weitgehend mit der Anordnung aus Figur 1 überein. Allerdings entfällt die redundante Energiequelle, das heißt die Backup-Batterie 11 und das elektronische Steuergerät 12 zum redundanten Bordnetzmanagement.

Stattdessen ist ein elektronisches Steuergerät 13 zur Unterdrückung von Gangwechseln vorgesehen, welches dazu konfiguriert ist, die Öffnung des Antriebsstrangs, das heißt das Öffnen der Kupplung 10 oder das Auslegen eines Ganges, im Schubbetrieb zu verhindern. Beispielsweise können Handschaltgetriebe (insbesondere Getriebeautomatik) gesperrt werden, um zu verhindern, dass der Fahrer bewusst oder reflexartig bei Fehlern die Kupplung 10 öffnet. Ferner kann eine Warnung an den Fahrer ausgegeben werden, wenn in Neutralstellung des Getriebes 14 gefahren wird (Verhinderung von Missbrauch).

Insbesondere ist das elektronische Steuergerät 13 zur Unterdrückung des Öffnens des Antriebsstrangs bei imminentem Ausfall des Fahrzeugbordnetzes 7 konfiguriert.

Diese Maßnahmen können bereits vorhandene Sicherheitsmaßnahmen im Bereich des Fahrzeugbordnetzes 7 zur Absicherung der Spannungsversorgung ergänzen, wie z.B. einen Batteriesensor zur Überwachung des Batterieladezustands mit Warnkonzept bei Tiefentladung.

Aus einer Analyse potentieller Ursachen für den Ausfall des Bordnetzes 7 können die Anforderungen an die Gangwechselunterdrückung bestimmt werden. Je nach Auslegung des Fahrzeugbordnetzes 7 können beispielsweise folgende Fehler relevant sein:
- fehlerhafte Bewertung des Batterie-Ladezustands oder Versagen einer Warnlogik, in Kombination mit einer tiefentladenen oder überalterten Batterie,
- Polabfall der Batterie bei Überlastung des Generators,
- Kurzschluss bei einem Bordnetzverbraucher, mindestens bis dieser durch eine Sicherung vom Fahrzeugbordnetz 7 getrennt wird.

Die Bordnetzspannung kann je nach Fehlerfall und abhängig von der Bordnetzauslastung, mit unterschiedlicher Dynamik abfallen.

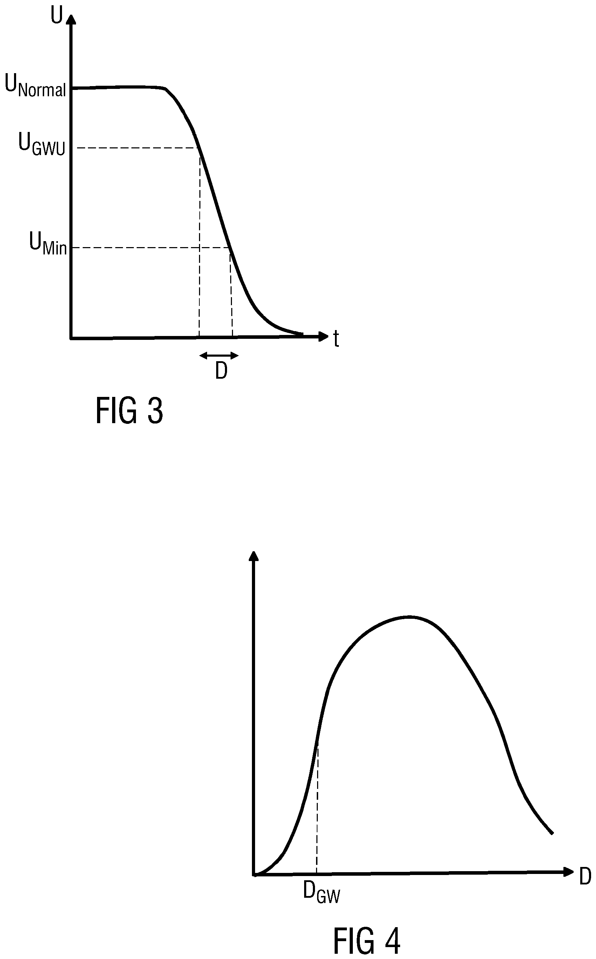

Figur 3 ist ein schematisches Diagramm eines typischen Abfalls einer Spannung U des Fahrzeugbordnetzes 7 bei Ausfall des Fahrzeugbordnetzes 7 über der Zeit t. Das Fahrzeugbordnetz 7 weist eine Normalspannung U_{Normal} von beispielsweise 24V bis 28V auf. Eine Spannungsschwelle U_{GWU} für die Gangwechselunterdrückung liegt unterhalb der Normalspannung U_{Normal}, jedoch oberhalb einer minimalen Spannung U_{Min}, die für die Steuerung 8 des Antriebsstrangs erforderlich ist. Bei Abfall der Spannung U von der Normalspannung U_{Normal} vergeht von einem Zeitpunkt, bei dem die Spannungsschwelle U_{GWU} für die Gangwechselunterdrückung unterschritten wird, bis zu einem Zeitpunkt, bei dem die minimale Spannung U_{Min} unterschritten wird, eine Zeitdifferenz mit einer Dauer D, die maximal zwischen einer Erkennung des Abfalls des Spannung U und einer Reaktionsmöglichkeit des Antriebsstrangs liegt.

Figur 4 ist ein schematisches Diagramm einer Verteilungsdichte der Dauer D des Abfalls der Spannung U, wobei schlagartige Abfälle der Spannung U am linken Ende der Verteilung und schleichende Abfälle der Spannung U am rechten Ende der Verteilungskurve zu finden sind. Es wird deutlich, dass ein großer Teil auftretender Abfälle der Spannung U oberhalb einer typischen Dauer D_{GW} liegen, bei der der Antriebsstrang während eines Gangwechsels geöffnet wird.

Wenn die Dauer D des Abfalls der Spannung U zwischen der Erkennung der Unterschreitung der Spannungsschwelle U_{GWU} und dem Erreichen der minimalen Spannung U_{Min} für die Steuerung 8 des Antriebsstrangs länger als die typische Dauer D_{GW} für einen Gangwechsel ist (genauer gesagt, die Zeit während der der Antriebsstrang bei einem Gangwechsel geöffnet wird), dann kann mit dem elektronischen Steuergerät 13 für die Gangwechselunterdrückung rechtzeitig verhindert werden, dass der Antriebsstrang geöffnet wird, aber gegebenenfalls nicht mehr geschlossen werden kann. Für die Bordnetzausfallszenarien, die hier am wahrscheinlichsten sind, wie oben aufgelistet, trifft diese Bedingung zu. Bei schlagartigen Ausfällen, bei denen dies nicht immer sichergestellt werden kann, kommt es für den potentiellen Ausfall der Lenkunterstützung auf die Synchronität des Spannungsausfalls mit dem Gangwechsel an, welche als sehr unwahrscheinlich erachtet werden kann, sofern kein kausaler Zusammenhang zwischen beiden besteht.

Das Auslösekriterium für die Unterdrückung des Gangwechsels erfordert die Messung der Spannung U des Fahrzeugbordnetzes 7, welche an unterschiedlichen Stellen im Fahrzeugbordnetz 7 implementiert werden kann, beispielsweise bei der Steuerung 8 des Antriebsstrangs oder bei einem Lenkungssteuergerät. Ferner ist eine schnelle Entscheidung und Kommunikation an die Steuerung 8 des Antriebsstrangs für die Kupplung 10 und das Getriebe 14 erwünscht, die dann das Öffnen des Antriebsstrangs verhindert. Je schneller die Gangwechselunterdrückung, von der Spannungsmessung bis zur Umsetzung in der Steuerung 8 für Kupplung 10 und Getriebe 14, desto geringer das Risiko eines Ausfalls der Lenkhilfe 2 bei rapiden Abfällen der Spannung U.

Zusätzlich können weitere Kriterien für eine Gangwechselunterdrückung hinzukommen. Beispielsweise kann das Steuergerät 13 zur Unterdrückung des Öffnens des Antriebsstrangs konfiguriert sein, wenn ein Ausfall des Vortriebs erkannt wird, zum Beispiel als Folge von Fehlern der Ansteuerung des Verbrennungsmotors oder bei Treibstoffmangel. Dies verringert das Risiko weiter, dass der Antriebsstrang während der Fahrt stillsteht, und somit auch der Generator nicht mehr angetrieben wird, was selbst mit einer schwach geladenen Batterie oder bereits unerkannt vorher getrennten Batterie zum Ausfall des Fahrzeugbordnetzes 7 und somit auch der gesamten Lenkhilfe 2 führen kann.

Unterhalb einer bestimmten Fahrgeschwindigkeit, beispielsweise unterhalb von 10 km/h bis 15 km/h, kann eine Situation mit Ausfall der Lenkhilfe 2 durch Betätigung einer Bremse als ausreichend beherrschbar gelten, sodass die Gangwechselunterdrückung unterhalb dieser Geschwindigkeitsschwelle wieder aufgehoben werden kann, sofern die Geschwindigkeit sicher bekannt ist. Dies ist hilfreich, um dem Fahrer in manchen Situationen (z.B. bei Bordnetzunterspannung, bei der die Spannung U unterhalb der Spannungsschwelle U_{GWU} für die Gangwechselunterdrückung liegt, oder wenn die Spannungsmessung selber ausgefallen ist) eine degradierte Funktion des Antriebsstrang weiter anbieten zu können. Das Schalten von Gängen wäre dann bis zu dieser Geschwindigkeit möglich und eine Weiterfahrt, gegebenenfalls bei hoher Motordrehzahl, im höchsten noch zuletzt geschalteten Gang, möglich.

Es kann vorgesehen sein, dass bei Aktivierung der Gangwechselunterdrückung über eine Schnittstelle, beispielsweise ein Kombiinstrument, eine Warnung an den Fahrer ausgegeben wird, damit er sein Fahrverhalten an die Gegebenheiten anpassen kann. Zusätzlich können Informationen über die Ursache der Aktivierung der Gangwechselunterdrückung zwecks Diagnose und Fehlerbehebung abgespeichert werden.

### Bezugszeichenliste

- 1: Lenkhilfe, hydraulische Lenkhilfe
- 2: Lenkhilfe, elektrische Lenkhilfe
- 3: Lenkrad
- 4: Lenkachse
- 5: Lenkhilfepumpe
- 6: Antriebsmotor
- 7: Fahrzeugbordnetz
- 8: Steuerung
- 9: Antriebsachse
- 10: Kupplung
- 11: Backup-Batterie
- 12: elektronisches Steuergerät
- 13: elektronisches Steuergerät
- 14: Getriebe
- D: Dauer
- D_{GW}: typische Dauer
- M_{E}: elektrisches Überlagerungsmoment
- M_{L}: Lenkmoment
- U: Spannung
- U_{GWU}: Spannungsschwelle für die Gangwechselunterdrückung
- U_{Min}: minimale Spannung
- U_{Normal}: Normalspannung
- t: Zeit

## Patentansprüche

1. Verfahren zum Betrieb eines Nutzfahrzeugs, umfassend ein Lenksystem mit einer durch eine Lenkhilfepumpe (5) versorgten hydraulischen Lenkhilfe (1) und einer durch ein Fahrzeugbordnetz (7) versorgten elektrischen Lenkhilfe (2), sowie eine Steuerung (8) eines Antriebsstrangs mit einer Kupplung (10) und einem Getriebe (14),
**dadurch gekennzeichnet, dass** bei Erkennung eines imminentem Ausfalls des Fahrzeugbordnetzes (7) die Öffnung des Antriebsstrangs, einschließlich das Öffnen der Kupplung (10) und/oder das Auslegen eines Ganges, verhindert wird.

2. Verfahren nach Anspruch 1,
**dadurch gekennzeichnet, dass** der imminente Ausfall des Fahrzeugbordnetzes (7) durch Überwachung einer Spannung (U) des Fahrzeugbordnetzes (7) und Erkennung einer Unterschreitung einer Spannungsschwelle (U_{GWU}) erkannt wird.

3. Verfahren nach Anspruch 1 oder 2,
**dadurch gekennzeichnet, dass** die Überwachung der Spannung (U) bei der Steuerung (8) des Antriebsstrangs oder bei einem Lenkungssteuergerät erfolgt.

4. Verfahren nach einem der vorhergehenden Ansprüche,
**dadurch gekennzeichnet, dass** die Öffnung des Antriebsstrangs im Schubbetrieb und/oder bei Erkennung eines Ausfalls eines Vortriebs des Fahrzeugs verhindert wird, insbesondere bei einem Fehler der Ansteuerung eines Verbrennungsmotors oder bei Treibstoffmangel.

5. Verfahren nach einem der vorhergehenden Ansprüche,
**dadurch gekennzeichnet, dass** die Verhinderung des Öffnens des Antriebsstrangs einer bestimmten Fahrgeschwindigkeit, insbesondere unterhalb von 10 km/h bis 15 km/h, unterbleibt.

6. Verfahren nach einem der vorhergehenden Ansprüche,
**dadurch gekennzeichnet, dass** bei Verhinderung des Öffnens des Antriebsstrangs und/oder bei Fahren in einer Neutralstellung des Getriebes (14) über eine Schnittstelle eine Warnung ausgegeben wird.

7. Verfahren nach einem der vorhergehenden Ansprüche,
**dadurch gekennzeichnet, dass** Informationen über die Ursache der Verhinderung des Öffnens des Antriebsstrangs abgespeichert werden.

8. Elektronisches Steuergerät (13), konfiguriert zur Durchführung des Verfahrens nach einem der vorhergehenden Ansprüche.

9. Nutzfahrzeug, umfassend ein Lenksystem mit einer durch eine Lenkhilfepumpe (5) versorgten hydraulischen Lenkhilfe (1) und einer durch ein Fahrzeugbordnetz (7) versorgten elektrischen Lenkhilfe (2), eine Steuerung (8) eines Antriebsstrangs mit einer Kupplung (10) und einem Getriebe (14),
**gekennzeichnet durch** ein elektronisches Steuergerät (13) nach Anspruch 8.

10. Nutzfahrzeug nach Anspruch 9,
**dadurch gekennzeichnet, dass** die die Lenkhilfepumpe (5) durch einen Antriebsmotor (6) des Nutzfahrzeugs angetrieben ist.
